Europäisches Patentamt

(19) European Patent Office

Office européen des brevets

(11) Numéro de publication : **0 462 033 A1**

(12) # DEMANDE DE BREVET EUROPEEN

(21) Numéro de dépôt : **91420191.8**

(22) Date de dépôt : **12.06.91**

(51) Int. Cl.⁵ : **A01C 7/04**

(30) Priorité : **12.06.90 FR 9007595**

(43) Date de publication de la demande :
**18.12.91 Bulletin 91/51**

(84) Etats contractants désignés :
**AT BE CH DE DK ES FR GB GR IT LI LU NL SE**

(71) Demandeur : **Gassot, Louis**
**Clerlande**
**F-63720 Ennezat (FR)**

(72) Inventeur : **Gassot, Louis**
**Clerlande**
**F-63720 Ennezat (FR)**

(74) Mandataire : **Chanet, Jacques**
**56 avenue de Royat, B.P. 27**
**F-63401 Chamalières Cédex (FR)**

(54) **Semoir pneumatique à graines isolées pour cultures maraîchères notamment.**

(57)    La présente invention a pour objet un semoir à graines isolées du type dans lequel une graine est plaquée par dépression contre un orifice d'une surface rotative qui la transfère depuis une trémie (9) jusqu'au racloir (17) d'un tube de descente (10).

Suivant l'invention, la surface de transfert est la surface extérieure d'un cylindre rotatif (1) comportant une pluralité d'orifices (15) équirépartis le long de lignes directrices équidistantes (16) ; la dépression est induite depuis une extrémité du cylindre.

Application aux cultures maraîchères, telles que de radis, poireaux, mâche, etc... en semis rapprochés.

fig 2

EP 0 462 033 A1

La présente invention est du domaine des techniques de l'agriculture, et plus particulièrement du domaine de l'ensemencement, et elle a pour objet un dispositif du type de semoir à graines isolées, notamment destiné à la culture maraîchère .

L'ensemencement mécanique, tel que pratiqué dans la culture maraîchère, de graines de petites tailles comme celles des radis par exemple, s'effectue en bande sur un terrain aplani. Le nombre et la distance séparant les lignes de semis est variable suivant le dispositif d'ensemencement utilisé. La régularité de la distance séparant chaque graine sur une ligne de semis et la profondeur à laquelle est placée la dite graine conditionne le bon développement du légume ensemencé. La rentabilité d'une exploitation de culture maraîchère est conditionnée en partie par le taux d'utilisation des sols, le bon développement des légumes ensemencés et le nombre de "passages" nécessaires, du dispositif d'ensemencement utilisé. Aussi, il est important de noter la densité maximale des lignes de semis et l'ensemencement de chaque graine sur une distance régulière sont des objectifs à atteindre en priorité.

On connait des semoirs dans lesquels les graines sont agitées dans une trémie par des roues à aube. Cette agitation projette les graines au travers de perforations pratiquées dans une paroi de la trémie, qui sont alors recueillies dans des tubes de descente. Cette technique, peu coûteuse, permet de faire des lignes de semis assez serrées, mais le caractère aléatoire de la projection des graines entraine un semis irrégulier, et par la suite, la production de légumes hétérogènes en taille.

On connait par ailleurs des semoirs dans lesquels les graines sont aspirées contre les perforations d'un disque tournant contre une cage de dépression. Les disques constituent des surfaces planes de transfert des graines depuis les trémies vers les tubes de descente. Ce dispositif forme un ensemble complexe et coûteux peu adapté à la culture maraîchère. En outre, l'intervalle important séparant chaque ligne de semis est conditionné par l'espace tranversal de chaque semoir que représente l'ensemble cage de dépression, disque, trémie, et tube de descente. La culture maraîchère s'effectuant en bande, le nombre des lignes de semis obtenues à chaque "passage" du dispositif n'est pas intéressant, surtout pour les cultures demandant des petits interlignes.

Le but de la présente invention est de proposer un dispositif du type semoir à graines isolées, peu coûteux et rentable pour la culture maraîchère, pour l'ensemencement des légumes à petites graines telles que radis, poireaux, mâche, etc...

Un autre but de l'invention est de proposer un dispositif permettant un ensemencement régulier des graines selon des lignes de semis aussi rapprochées que souhaité, l'interligne minimum se situant à 5 cm environ.

Selon la présente invention grâce à laquelle sont atteints les buts précités, un dispositif d'ensemencement, suporté par un châssis tractable, dispositif dans lequel chaque graine est plaquée par une dépression contre un orifice situé sur une surface rotative qui la transfère depuis une trémie jusqu'au racloir d'un tube de desceinte, protégé à l'avant par un soc creux, à travers lequel la graine arrive en son point de dépose, est caractérisé en ce que la dite surface,de transfert est cylindrique.

Cette surface est préférentiellement la surface extérieure d'un tube rotatif cylindrique monobloc le long duquel une première pluralité d'orifices a été percée, ces orifices étant sensiblement équirépartis le long d'une seconde pluralité de lignes directrices (cercles de la surface cylindrique) équidistantes. La dépression produite par un dispositif de type turbine, est induite dans la partie interne du tube cylindrique au moyen d'une cage de dépression située avantageusement à une des extrémités du tube et reliée à la turbine par une conduite d'aspiration ; l'étanchéité entre la cage de dépression et le tube est assurée de préférence par un joint spi à lèvre équipé d'un ressort torique. De préférence, l'ensemble constitué de la turbine et de la cage de dépression est unique pour la totalité des orifices.

Suivant une forme préférée de réalisation, la relation entre le volume intérieur du tube et la conduite d'aspiration est établie par des lumières percées radialement à l'extrémité de la paroi du tube et débouchant dans la cage d'aspiration. Suivant une autre forme de réalisation, la relation entre le volume interne du tube cylindrique et la turbine pourrait être établie par un ajutage monté, par l'intermédiaire d'un roulement étanche, coaxialement à l'intérieur de l'extrémité du tube.

La trémie dans laquelle est situé le tube cylindrique, est, selon une forme avantageuse de réalisation, unique pour la totalité des lignes directrices le long desquelles sont réparties les orifices; le volume de la trémie est délimité à l'arrière par une paroi inclinée, au-dessous par un fond et à l'avant par le tube lui-même et par un joint souple, de préférence en matière alvéolaire (mousse) fixé sur le fond et prenant appui contre la partie basse du tube.

Des couteaux de sélection, fixés à la trémie sont répartis de telle sorte que chacun d'eux affleure chaque ligne directrice, autorisant le plaquage d'une seule graine par orifice.

Un pluralité de tubes de descente correspondant à la dite seconde pluralité des lignes directrices suivant lesquelles sont percés les orifices, est fixée à la trémie, l'extrémité supérieure de chaque tube de descente raclant la surface cylindrique de tranfert; à une faible distance devant chaque tube'de descente est disposé, fixé au châssis, un soc creux de type connu destiné à ouvrir le sol et à protéger le tube de descente auquel il est associé.

Avantageusement, des bavettes pivotantes sont fixeés au châssis ou la trémie à l'arrière des tubes de descente, en vue d'amorcer un recouvrement des graines.

L'entrainement rotatif du tube cylindrique se fait avantageusement par l'intermédiaire de moyens de transmission constitués d'un ensemble de chaines de transmission et roues dentées, le reliant à un rouleau de tassement du sol qui génère ainsi le mouvement du dit tube cylindrique. On notera qu'il est aussi prévu que les moyens de transmission comprennent des moyens pour changer la vitesse de rotation du tube donc la densité des graines sur la ligne par un simple changement de pignon.

Suivant une forme de réalisation, la conduite de la dépression, au niveau du tube cylindrique et de la cage de dépression sera radiale. Suivant une autre forme de réalisation, celle-ci pourra être axiale.

Suivant une forme de réalisation préférentielle, le tube cylindrique est monobloc et interchangeable selon la distance souhaitée séparant les lignes de semis entre elles. Selon une variante, le dit tube cylindrique est constitué d'une succession d'éléments tubulaires présentant les mêmes caractéristiques, disposés les uns à la suite des autres.

La présente invention sera mieux comprise et des détails en relevant apparaîtront à la description qui va être faite d'une forme préférée de réalisation, en relation avec les figures des planches annexées, dans lesquelles :

  - la fig.1 est une vue de côté schématique du dispositif dans son ensemble,
  - la fig.2 est une vue schématique partielle en perspective du tube cylindrique, de la cage de épression, de la trémie et des tubes de descente.
  - la fig.3 est une vue schématique en coupe de la cage de dépression et du tube cylindrique.
  - la fig.4 illustre schématiquement en coupe une variante de réalisation de la trémie.

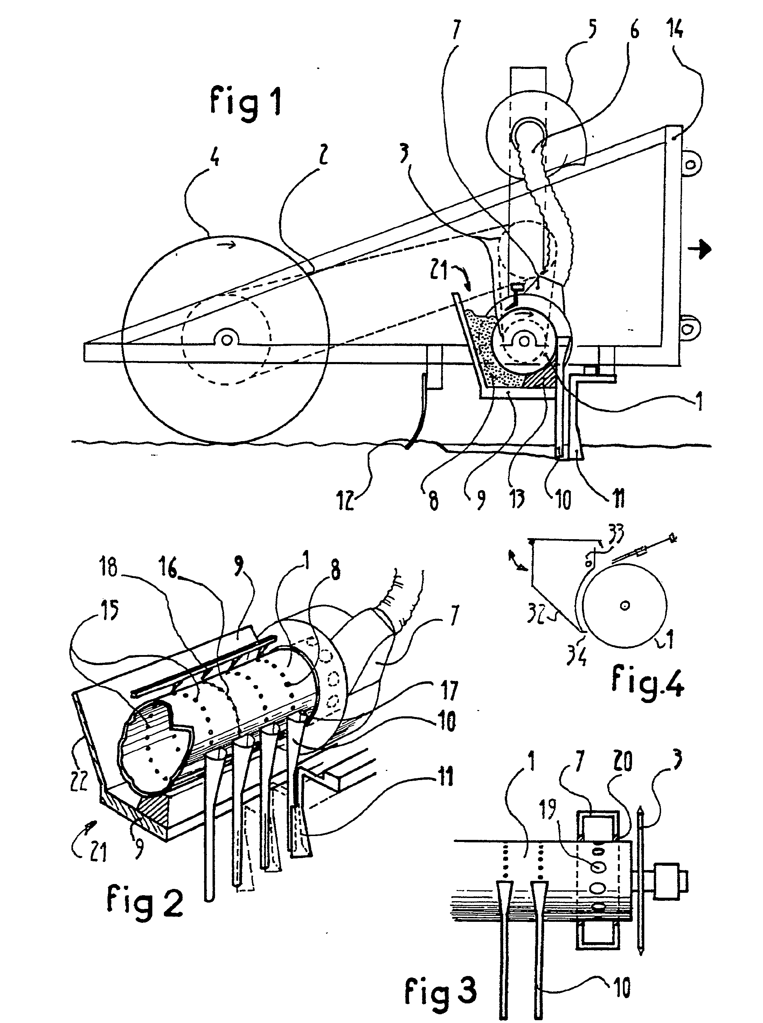

Sur la fig.1, un tube cylindrique 1 est entrainé en rotation par un moyen de transmission constitué d'un ensemble de chaines de transmission 2 et de roues dentées 3, le reliant à un rouleau de tassement du sol 4 qui génère ainsi le mouvement au dit tube cylindrique. Une turbine 5 produit une dépression qui se propage par une conduite d'aspiration 6 jusqu'à une cage de dépression 7, qui la communique radialement à l'intérieur du tube cylindrique 1. Des graines 8 contenues dans une trémie sont plaquées par cette dépression contre la surface du tube cylindrique 1 au débouché d'orifices traversant sa paroi. Ces graines sont ainsi transférées de la trémie 9 où elles sont stockées, à des tubes de descente 10 protégés par des socs creux 11, d'où elles sont déposées dans le sol au fond des sillons ouverts par les socs. Des bavettes pivotantes 12 aplanissent le sol et recouvre de terre les graines, laquelle terre est ensuite tassée et aplanie par le rouleau 44.

Un châssis tractable 14, supporté lui-même par le rouleau de tassement 4, supporte l'ensemble du dispositif et peut être atelé à un tracteur (non représenté sur la figure).

Sur la fig.2, la cage de dépression 7 conduit l'aspiration à l'intérieur du tube cylindrique 1. Les graines 8 sont plaquées par cette dépression contre la paroi au débouché d'orifices 15; ces derniers sont sensiblement équirépartis le long de lignes directrices 16( cercles de la surface cylindrique 1. Les graines 8 sont ainsi transférées de la trémie 9 au racloir 17 du tube de descente 10. Des couteaux de sélection 18 n'autorisent le plaquage que d'une seule graine 8 par orifice 15, ces couteaux étant disposés de manière à affleurer chaque ligne directrices 16. La trémie 21 dans laquelle est situé le cylindre 1, a son volume délimité à l'arrière par une paroi inclinée 22, au-dessous par un fond 9 et à l'avant par le tube 1 lui-même et par un joint 13 en matière alvéolaire souple(mousse) fixé sur le fond 9 et prenant appui contre la partie basse du cylindre 1 ; ce joint 13 permet de contenir les graines 8 à l'intérieur de la trémie 9.

Sur la figure 3, le cylindre 1 est entraîné en rotation par la roue dentée 3. La dite dépression est communiquée de la cage de dépression 7 à l'intérieur du tube cylindrique 1 par l'intermédiaire de lumières 19 pratiquées dans la paroi du cylindre 1. L'étanchéité entre la cage de dépression 7 et le tube cylindrique 1 est,,assurée par des joints à lèvre et à ressort torique 20.

Selon une autre variante, la surface cylindrique perforée pourrait être celle de tambours de courte longueur, indépendants mais pouvant être assemblés coaxialement les uns dans le prolongement des autres, chaque tambour pouvant comporter une ou plusieurs lignes d'orifices.

Sur la fig.4, la trémie 32 comporte un bord inférieur râcleur 34 et est conformée en caisson pivotant autour d'un axe horizontal 33 ce qui permet de la vider facilement.

A la lumière de la description qui vient d'être faite, on retiendra comme caractéristiques importantes de l'invention :

  - en premier lieu, la combinaison d'un cylindre rotatif 1 perforé et mis en dépression et d'un rouleau 4 de tassement, constituant les moyens de roulement au sol et accessoirement d'entrainement en rotation synchrone du cylindre rotatif,
  - en second lieu, pour chaque ligne de perforations du cylindre et devant le rouleau, d'un ensemble d'enfouissement des graines comprenant de l'avant vers l'arrière, un petit soc 11 pour creuser un sillon de profondeur réglable, un tube de descente 10 et une bavette de recouvrement située à faible distance derrière le tube ; ces moyens ont pour résultat de permettre de semer les graines de façon rapprochée et très précise tant en espacement qu'en profondeur, ce qui est particulièrement indispensable en culture maraîchère,

– en troisième lieu, par le fait que la dépression est créée dans le cylindre par une cage 7 entourant le cylindre 1 à l'une de ses extrémités pourvue de lumière radiales 19, l'étanchéité entre la cage et le cylindre étant assurée par des joints à lèvre, la cage étant reliée à la turbine 5.

Bien que l'on ait décrit et représenté une forme préférée de réalisation, il doit être compris que la portée de la présente invention n'est pas limitée à cette forme mais qu'elle s'étend à tout dispositif comportant les caractéristiques énoncées plus haut.

## Revendications

1.- Dispositif d'ensemencement notamment destiné à la culture maraîchère, du type de semoir à graines isolées suivant lequel chaque graine (8) est plaquée par une dépression contre un orifice (15) situé sur une surface rotative qui la transfère depuis un trémie (9) jusqu'au racloir (17) d'un tune de descente (10) protégé par un soc creux (11) à travers lesquels la graine (8) arrive en son point de dépose le dit dispositif étant supporté par un châssis tractable, caractérisé :

en ce que la dite surface de transfert est cylindrique ;

2.- Dispositif selon la revendication 1, caractérisé :

en ce que la dite surface est la surface extérieure d'un tube rotatif cylindrique (1), le long duquel une pluralité d'orifices a été percée les orifices étant sensiblement équirépartis le long des lignes directrices équidistantes.

d'où il résulte que les lignes directrices (16) déterminant les lignes de semis, peuvent être aussi proches que souhaité ;

3.- Dispositif selon la revendication 1, caractérisé :

en ce que la dite dépression est induite dans la partie interne du dit tube par l'intermédiaire d'une cage de dépression (7) située à une de ses extrémités et reliée à la turbine (5) par une conduite d'aspiration (6), et

en ce que l'étanchéité entre la cage de dépression (7) et le tube (1) est assurée par un joint à lèvre équipée d'un ressort torique (20) ;

4.- Dispositif selon la revendication 1, caractérisé :

en ce que l'ensemble turbine (5) et cage de dépression (7) est unique pour la totalité des dits orifices (15) ;

5.- Dispositif selon la revendication 1, caractérisé :

en ce que la trémie d'approvisionnement (9) des graines (8) est unique pour la totalité des différentes lignes directrices (16) correspondante aux lignes de semis ;

6.- Dispositif selon la revendication 5, caractérisé :

en ce que le volume de la trémie (9) est délimité à l'arrière par une paroi inclinée (22), au-dessous par un tond (9) et à l'avant par le tube (1) lui-même et par un joint souple (13) fixé sur le fond et prenant appui contre la partie basse du tube ;

7.- Dispositif selon la revendication 1, caractérisé :

en ce qu'une pluralité de tubes de descente correspondant à la dite seconde pluralité des lignes directrices suivant lesquelles sont percés les orifices, est fixée à la trémie, l'extrémité supérieure de chaque tube de descente raclant la surface cylindrique de transfert, et

en ce qu'à une faible distance devant chaque tube de descente est disposé, fixé au châssis, un soc creux de type connu destiné à ouvrir le sol et à protéger le tube de descente auquel il est associé.

8.- Dispositif selon la revendication 7, caractérisé :

en ce que l'entrainement de la surface de transfert est réalisée par des moyens de transmission reliant la dite surface de transfert a un rouleau de tassement du sol.

9.- Dispositif selon la revendication 8, caractérisé :

en ce que les dits moyens de transmission comprenant des moyens jour changer la vitesse de rotation de la dite surface de transfert cylindrique,

d'où il résulte que l'on peut ainsi faire varier la densité des graines déposées le long des lignes de semis.

fig 1

Fig 2

fig 3

Fig.4

**Office européen des brevets**

# RAPPORT DE RECHERCHE EUROPEENNE

Numero de la demande

EP    91 42 0191

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1 503 687 (DAMOUR)<br><br>* page 2, alinéa 2 - page 3; figures 1,2 *<br>--- | 1,2,4, 5-8 | A01C7/04 |
| X | FR-A-2 291 927 (CAMBRIDGE CONSULTANTS)<br><br>* page 1, ligne 25 - page 4, ligne 6; figures 1,2 *<br>--- | 1,2,4, 5-9 | |
| X | US-A-1 637 834 (OLIVER)<br>* page 1, ligne 63 - page 2, ligne 91; figures 1,2,3 *<br>--- | 1-5,7-9 | |
| X | US-A-1 371 517 (OLIVER)<br>* colonne 1, ligne 34 - colonne 2, ligne 6; figures 1,2,3 *<br>----- | 1-4,8 | |

**DOMAINES TECHNIQUES RECHERCHES (Int. Cl.5)**

A01C

Le présent rapport a été établi pour toutes les revendications

| Lieu de la recherche | Date d'achèvement de la recherche | Examinateur |
|---|---|---|
| LA HAYE | 01 AOUT 1991 | VERMANDER R.H. |

EPO FORM 1503 03.82 (P0402)